# EUROPEAN PATENT APPLICATION

(11) **EP 4 088 969 A1**
(43) Date of publication of application: **16.11.2022**
(21) Application number: 21173506.3
(22) Date of filing: 12.05.2021
(51) Int. Cl.: B60Q 1/14, B60Q 1/44

(54) **A SYSTEM AND METHOD FOR CONTROLLING THE LIGHT INTENSITY OF A VEHICLE LAMP**

(71) Applicant: VOLVO TRUCK CORPORATION, 405 08 Göteborg (SE)
(72) Inventor: SHARMA, Deepak, Punjab 146001 (IN)
(74) Representative: Germain Maureau

(57) **Abstract**

The invention relates to a method for controlling intensity of at least one headlamp (102) and/or at least one brake lamp (104) of a vehicle (100), characterized by the step of reducing intensity (3) of the at least one headlamp (102) and/or brake lamp (104) when direction indicators (106, 108) are activated.

## Description

### TECHNICAL FIELD

The invention relates to a system and method for controlling intensity of a vehicle light. The present invention also relates to a vehicle comprising a system for controlling intensity of a vehicle light.

The invention can be applied in vehicle and heavy-duty vehicles, such as trucks, buses and construction equipment. Although the invention will be described with respect to a passenger vehicle, the invention is not restricted to this particular vehicle, but may also be used in other vehicles such as trucks, buses and construction equipment.

### BACKGROUND

A vehicle generally comprises a left and a right headlamp, and a left and a right front direction indicator, arranged at the front of the vehicle relative to its direction of travel. Additionally, a vehicle is also provided with a left and a right brake lamp, a left and right rear tail lamp and a left and a right rear direction indicator, arranged at the rear of the vehicle relative to its direction of travel. Brake lamps are activated when a driver applies on the vehicle's brakes and turn to a red brighter than the rear tail lamps.

The direction indicators include blinking lamps activated by a driver on one side of the vehicle to advertise an intention to turn or change lane.

When turned on, the headlamps either can be in a high-beam mode or in a low-beam mode. The low-beam mode is usually named dipped beam mode. In high beam; headlamps provide an intense light whereas in dipped-beam headlamps provide a light distribution offering adequate illumination without dazzling other road users.

When the vehicle is running with headlamps turned on, especially in night time when the headlamps are on high-beam mode, it can be difficult to see whether the left or right front direction indicator is on because of the full beam dazzling effect. In the same way, when brake lamps are activated, it can be difficult for other road users to see whether the left or right rear direction indicator is on, especially in case of combination lamps. Pedestrians or drivers cannot see clearly the direction of the vehicle.

Today, in most circumstances, a driver can manually bring down the headlamps from the high-beam mode to the dipped-beam mode, for example when other vehicle are present on the road. However, this operation relies on the driver, and may therefore be performed later than necessary or not performed at all.

Moreover, there is currently no known system for controlling the intensity of brake lamps.

It is therefore desirable to provide a system and method for controlling intensity of a vehicle light that is automatic, in order to prevent accidents.

### SUMMARY

An object of the invention is to provide a system and method for controlling intensity of a vehicle light, that solve at least the previous problem of the prior art.

According to a first aspect of the invention, the object is achieved by a method according to claim 1.

Therefore the intensity of the at least one headlamp and/or brake lamp can be automatically controlled and adapted to the direction indicators.

According to one embodiment, the step of reducing intensity of the at least one headlamp and/or brake lamp is performed by a light intensity controller.

According to one embodiment, the step of reducing intensity of the at least one headlamp and/or brake lamp comprises the steps of:
- reducing intensity of a left headlamp and/or left bake lamp when left direction indicators are activated, and/or
- reducing intensity of a right headlamp and/or right brake lamp when right direction indicators are activated.

According to one embodiment, the step of reducing intensity of the at least one headlamp and/or brake lamp comprises the steps of:
- determining if the direction indicators are activated,
- if the direction indicators are activated, determining a mode of lighting of the at least one headlamp and/or brake lamp,
- if the at least one headlamp and/or brake lamp is in a high beam mode, reducing intensity of the at least one headlamp and/or brake lamp.

According to one embodiment, the step of reducing intensity of the at least one headlamp and/or brake lamp comprises a step of switching the at least one headlamp and/or brake lamp from the high beam mode to a dipped beam mode.

In high beam mode headlamps and/or brake lamps provide an intense light, whereas in dipped-beam mode headlamps and/or brake lamps provide a light distribution offering adequate illumination without dazzling other road users.

According to a second aspect of the invention, the object is achieved by a system according to claim 6.

By the provision of a light intensity control system which comprises a light intensity controller configured to reduce intensity of the at least one headlamp and/or at least one brake lamp, when the direction indicators are activated, the intensity of the at least one headlamp and/or brake lamp can be automatically controlled and adapted to the direction indicators.

According to one embodiment, the light intensity controller is configured to reduce intensity of a left headlamp and/or left bake lamp when left direction indicators are activated.

According to one embodiment, the light intensity controller is configured to reduce intensity of a right headlamp and/or right brake lamp when right direction indicators are activated.

According to one embodiment, the light intensity controller is configured to determine if the direction indicators are activated, and to determine a mode of lighting of the at least one headlamp and/or brake lamp.

According to one embodiment, the light intensity controller is configured to switch the at least one headlamp and/or brake lamp from a high beam mode to a dipped beam mode. According to one embodiment, the light intensity control system comprises a first light intensity controller configured to reduce intensity of the at least one headlamp when the direction indicators are activated, and a second light intensity controller configured to reduce intensity of the at least one brake lamp when the direction indicators are activated.

According to a third aspect of the invention, the object is achieved by a vehicle according to claim 12.

According to one embodiment, the at least one brake lamp and one of the direction indicators form a combination lamp.

According to one embodiment, the at least one headlamp and one of the direction indicators form a combination lamp.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a front view of a vehicle, relative to its direction of travel, the vehicle being partially represented,
Fig. 2 is a rear view of the vehicle of figure 1, relative to its direction of travel,
Fig. 3 is a schematic view of a light intensity control system according to an embodiment of the invention,
Fig. 4 is a schematic view of a light intensity control system according to an embodiment of the invention, and
Fig. 5 is a schematic diagram of a method for controlling intensity of at least one headlamp and/or brake lamp, according to an embodiment of the invention.

### DETAILED DESCRIPTION OF EXAMPLE EMBODIMENTS OF THE INVENTION

In this document, "vehicle" means any of a vehicle used for transporting items and goods, such as a mining truck, and a vehicle for transporting people, such as a car, a van, a bus or a trailer.

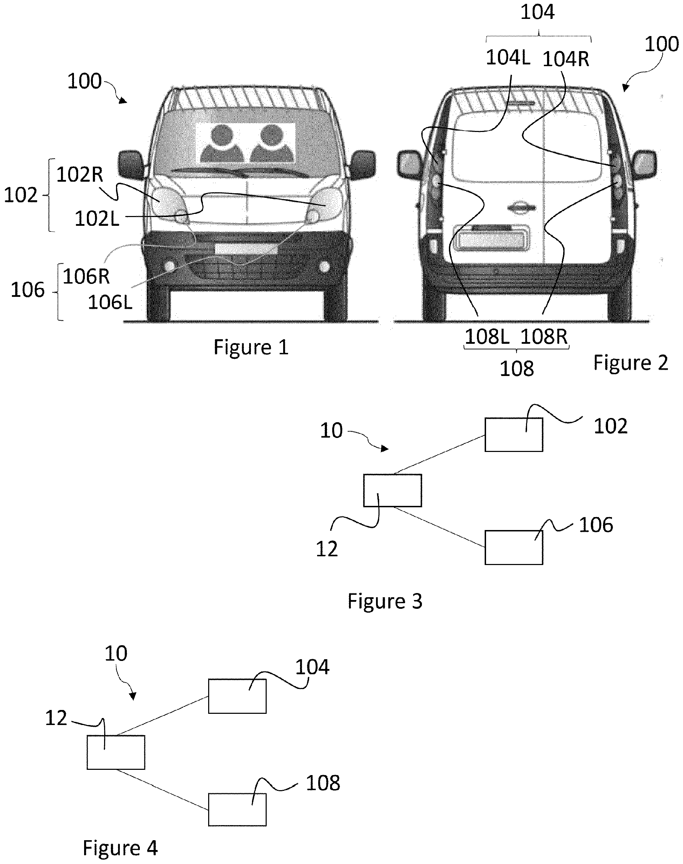

Figures 1 and 2 shows a vehicle 100 comprising at least one headlamp 102, at least one brake lamp 104 and direction indicators 106, 108.

More precisely, the vehicle 100 can comprise a left headlamp 102L, a right headlamp 102R, a left brake lamp 104L and a right brake lamp 104R.

The direction indicators 106, 108 can comprise front direction indicators 106 and rear direction indicators 108. The direction indicators 106, 108 can comprise a left front direction indicator 106L, a right front direction indicator 106R, a left rear direction indicator 108L and a right rear direction indicator 108R.

The vehicle 100 comprises at least one light intensity control system 10 as illustrated in figure 3 and figure 4.

The at least one light intensity control system 10 comprises a light intensity controller 12 configured to reduce intensity of the at least one headlamp 102 and/or brake lamp 104 when the direction indicators 106, 108 are activated.

The light intensity controller 12 can be configured to reduce intensity of the at least one headlamp 102 when the front direction indicators 106 are activated. The light intensity controller 12 can be configured to reduce intensity of the at least one brake lamp 104 when the rear direction indicators 106 are activated.

The at least one headlamp 102 and the at least one brake lamp 104 are configured to be in a high beam mode, in a dipped beam mode, or off.

The direction indicators 106, 108 comprise blinking lamps configured to be activated by a driver to advertise an intention to turn or change lane.

The at least one brake lamp 104 and one of the direction indicators 108 can form a combination lamp. The at least one headlamp 102 and one of the direction indicators 106 can form a combination lamp.

The light intensity controller 12 can be configured to switch the at least one headlamp 102 from the high beam mode to the dipped beam mode.

The light intensity controller 12 can be electrically connected to the at least one headlamp 102, the at least one brake lamp 104 and the direction indicators 106, 108.

The light intensity controller 12 is configured to receive information from the at least one headlamp 102, the at least one brake lamp 104 and the direction indicators 106, 108. When the at least one headlamp 102 and/or the at least one brake lamp 104 is in the high beam mode and the direction indicators 106, 108 are activated, the light intensity controller 12 is configured to switch the at least one headlamp 102 and/or the at least one brake lamp 104 from the high beam mode to the dipped beam mode.

As shown in figure 3, the light intensity controller 12 can be electrically connected to the at least one headlamp 102 and the front direction indicators 106.

The light intensity controller 12 is configured to receive information from the at least one headlamp 102 and the front direction indicators 106. When the at least one headlamp 102 is in the high beam mode and the at least one front direction indicators 106 are activated, the light intensity controller 12 is configured to switch the at least one headlamp 102 from the high beam mode to the dipped beam mode.

More precisely, the light intensity controller 12 can be electrically connected to the left headlamp 102L and the left front direction indicator 106L. The light intensity controller 12 can be electrically connected to the right headlamp 102R and the right front direction indicator 106R.

As shown in figure 4, the light intensity controller 12 can be electrically connected to the at least one brake lamp 104 and the rear direction indicators 108.

The light intensity controller 12 is configured to receive information from the at least one brake lamp 104 and the rear direction indicators 108. When the at least one brake lamp 104 is in the high beam mode and the at least one rear direction indicators 108 are activated, the light intensity controller 12 is configured to switch the at least one brake lamp 104 from the high beam mode to the dipped beam mode.

More precisely, the light intensity controller 12 can be electrically connected to the left brake lamp 104L and the left rear direction indicator 108L. The light intensity controller 12 can be electrically connected to the right brake lamp 104R and the right rear direction indicator 108R.

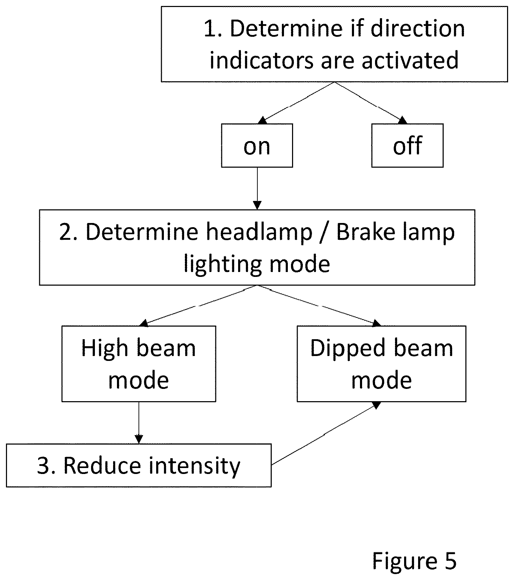

As illustrated in figure 5, the method for controlling intensity of at least one headlamp 102 and/or at least one brake lamp 104 of a vehicle 100 comprises the step of reducing intensity 3 of the at least one headlamp 102 and/or brake lamp 104 when direction indicators 106, 108 are activated.

The step of reducing intensity 3 of the at least one headlamp 102 and/or brake lamp 104 can be performed by a light intensity controller 12 as described above.

More precisely, the step of reducing intensity 3 of the at least one headlamp 102 and/or brake lamp 104 can comprise the steps of:
- reducing intensity of a left headlamp 102L and/or left brake lamp 104L when left direction indicators 106L, 108L are activated, and/or
- reducing intensity of a right headlamp 102R and/or right brake lamp 104R when right direction indicators 106R, 108R are activated.

The step of reducing intensity 3 of the at least one headlamp 102 and/or brake lamp 104 can comprise the step of determining 1 if the direction indicators are activated.

The step of reducing intensity 3 of the at least one headlamp 102 and/or brake lamp 104 can comprise the step of determining 2 a mode of lighting of the at least one headlamp 102 and/or brake lamp 104.

If the direction indicators 106, 108 are activated, the step of reducing intensity 3 of the at least one headlamp 102 and/or brake lamp 104 can comprise the step of determining 2 a mode of lighting of the at least one headlamp 102 and/or brake lamp 104.

If the direction indicators 106, 108 are activated, and if the at least one headlamp 102 and/or brake lamp 104 are in a high beam mode, the intensity of the at least one headlamp 102 and/or brake lamp 104 is reduced.

If the at least one headlamp 102 and/or brake lamp 104 is in high beam mode, the step of reducing intensity 3 of the at least one headlamp 102 and/or brake lamp 104 can consist of switching the at least one headlamp 102 and/or brake lamp 104 from the high beam mode to a dipped beam mode.

It is to be understood that the present invention is not limited to the embodiments described above and illustrated in the drawings; rather, the skilled person will recognize that many changes and modifications may be made within the scope of the appended claims.

## Claims

1. A method for controlling intensity of at least one headlamp (102) and/or at least one brake lamp (104) of a vehicle (100), **characterized by** the step of reducing intensity (3) of the at least one headlamp (102) and/or brake lamp (104) when direction indicators (106, 108) are activated.

2. The method according to claim 1, **characterized in that** the step of reducing intensity (3) of the at least one headlamp (102) and/or brake lamp (104) is performed by a light intensity controller (12).

3. The method according to any of claims 1 and 2, **characterized in that** the step of reducing intensity (3) of the at least one headlamp (102) and/or brake lamp (104) comprises the steps of:
- reducing intensity of a left headlamp (102L) and/or left bake lamp (104L) when left direction indicators (106L; 108L) are activated, and/or
- reducing intensity of a right headlamp (102R) and/or right brake lamp (104R) when right direction indicators (106R, 108R) are activated.

4. The method according to any of claims 1 to 3, **characterized in that** the step of reducing intensity (3) of the at least one headlamp (102) and/or brake lamp (104) comprises the steps of:
- determining (1) if the direction indicators are activated,
- if the direction indicators are activated, determining (2) a mode of lighting of the at least one headlamp and/or brake lamp,
- if the at least one headlamp and/or brake lamp is in a high beam mode, reducing intensity (3) of the at least one headlamp (102) and/or brake lamp (104).

5. The method according to claim 4, **characterized in that** the step of reducing intensity (3) of the at least one headlamp (102) and/or brake lamp (104) comprises a step of switching the at least one headlamp and/or brake lamp from the high beam mode to a dipped beam mode.

6. A light intensity control system (10) for a vehicle (100) comprising at least one headlamp (102), at least one brake lamp (104) and direction indicators (106, 108), **characterized in that** the system (10) comprises a light intensity controller (12) configured to reduce intensity of the at least one headlamp (102) and/or at least one brake lamp (104), when the direction indicators (106, 108) are activated.

7. The light intensity control system according to claim 6, **characterized in that** the light intensity controller (12) is configured to reduce intensity of a left headlamp (102L) and/or left bake lamp (104L) when left direction indicators (106L; 108L) are activated.

8. The light intensity control system according to any of claims 6 and 7, **characterized in that** the light intensity controller (12) is configured to reduce intensity of a right headlamp (102R) and/or right brake lamp (104R) when right direction indicators (106R, 108R) are activated.

9. The light intensity control system according to any of claims 6 to 8, **characterized in that** the light intensity controller (12) is configured to determine if the direction indicators are activated, and to determine a mode of lighting of the at least one headlamp and/or brake lamp.

10. The light intensity control system according to any of claims 6 to 9, **characterized in that** the light intensity controller (12) is configured to switch the at least one headlamp and/or brake lamp from a high beam mode to a dipped beam mode.

11. The light intensity control system according to any of claims 6 to 10 **characterized in that** it comprises a first light intensity controller (12) configured to reduce intensity of the at least one headlamp (102) when the direction indicators (106, 108) are activated, and a second light intensity controller (12) configured to reduce intensity of the at least one brake lamp (104) when the direction indicators (106, 108) are activated.

12. A vehicle comprising at least one headlamp, at least one brake lamp, and direction indicators, **characterized in that** it comprises at least one light intensity control system according to any of claims 6 to 10.

13. The vehicle according claim 12, **characterized in that** the at least one brake lamp and one of the direction indicators form a combination lamp.

14. The vehicle according any of claims 12 and 13, **characterized in that** the at least one headlamp and one of the direction indicators form a combination lamp.
